# EUROPÄISCHE PATENTSCHRIFT

(11) **EP 3 645 215 B1**
(45) Veröffentlichungstag und Bekanntmachung des Hinweises auf die Patenterteilung: **27.09.2023**
(21) Anmeldenummer: 18731155.0
(22) Anmeldetag: 22.06.2018
(51) Int. Cl.: B25F 5/00

(54) **VERFAHREN ZUM EINSTELLEN EINES GANGES IN EINEM GETRIEBE EINER WERKZEUGMASCHINE, UND WERKZEUGMASCHINE ZUR DURCHFÜHRUNG DES VERFAHRENS**
METHOD FOR SETTING A GEAR IN A TRANSMISSION OF A POWER TOOL, AND CORRESPONDING POWER TOOL
PROCÉDÉ DE RÉGLAGE D'UNE VITESSE DANS UNE BOÎTE DE VITESSES D'UN OUTIL, ET OUTIL CORRESPONDANT

(30) Priorität: 29.06.2017 EP 17178577
(43) Veröffentlichungstag der Anmeldung: 06.05.2020
(73) Patentinhaber: Hilti Aktiengesellschaft, 9494 Schaan (LI)
(72) Erfinder: HANSLMEIER, Xaver, 87665 Mauerstettten (DE); VAN TAACK-TRAKRANEN, John, 81475 Muenchen (DE)
(74) Vertreter: Hilti Aktiengesellschaft Corporate Intellectual Property
(86) Internationale Anmeldenummer: PCT/EP2018/066765
(87) Internationale Veröffentlichungsnummer: WO 2019/002128

(56) Entgegenhaltungen:
- EP-A1- 3 135 438
- EP-A2- 2 762 278
- US-A1- 2013 292 147

## Beschreibung

Die vorliegende Erfindung betrifft ein Verfahren zum Einstellen eines Ganges in einem Getriebe einer Werkzeugmaschine, insbesondere einer Kernbohrmaschine, wobei die Werkzeugmaschine einen Elektromotor zum Erzeugen und Übertragen eines Drehmoments auf das Getriebe sowie ein Steuerungsgerät zum Einstellen der Drehzahl des Elektromotors enthält und das Getriebe eine Bedienvorrichtung zum Auswählen eines Ganges in dem Getriebe, eine Schaltgabel zum Einlegen eines Ganges in dem Getriebe sowie ein Schrittmotor zum Übertragen einer Bewegung der Bedienvorrichtung auf die Schaltgabel enthält, wobei die Bedienvorrichtung wenigstens einen Signalgeber sowie wenigstens einen Sensor zum Empfangen wenigstens eines Signals des wenigstens einen Signalgebers enthält.

Darüber hinaus betrifft die Erfindung eine Werkzeugmaschine zur Durchführung des erfindungsgemäßen Verfahrens. Es wird ferner ein Getriebe für eine Werkzeugmaschine, insbesondere eine Kernbohrmaschine, offenbart zur Durchführung des erfindungsgemäßen Verfahrens.

Für Werkzeugmaschinen, insbesondere bei Werkzeugmaschinen mit einem sich drehenden Werkzeug, ist eine genaue Abstimmung der Drehgeschwindigkeit des Werkzeugs auf das verwendete Werkzeug von großer Bedeutung.

Hierbei sind insbesondere die Größe, das Volumen und das Gewicht des verwendeten Werkzeugs wichtige Faktoren. Eine zu niedrige Drehgeschwindigkeit bei einem zu großen Werkzeug führt zu einem zu langsamen und ineffizienten Arbeitsfortschritt, sodass sich der Arbeitsprozess insgesamt verlängert. Im Gegensatz dazu kann eine zu hohe Drehgeschwindigkeit zu einer Beschädigung an der Werkzeugmaschine oder dem Werkzeug führen.

Bei Kernbohrmaschinen ist die genaue Abstimmung bzw. Anpassung der Drehgeschwindigkeit des Werkzeugs, d.h. der Bohrkrone, auf die Größe der Bohrkrone bzw. den Durchmesser der Bohrkrone von ganz besonderer Wichtigkeit.

Kernbohrmaschinen verwenden zylinderförmige Bohrkronen, die mit Hilfe einer diamantbesetzten Schneidekante Löcher in mineralische Werkstoffe, z.B. Beton oder Mauerwerk, schneiden können. Um die Drehzahl und das Drehmoment der Bohrkrone für verschiedene Anwendungen variieren zu können, verfügen Kernbohrmaschinen für gewöhnlich auch über ein Getriebe, welches wenigstens zwei Gänge enthält. Mit Hilfe der unterschiedlichen Gänge kann die Drehgeschwindigkeit sowie das Drehmoment der Bohrkrone eingestellt werden. Das Einhalten einer möglichst konstanten Umfangsgeschwindigkeit der Bohrkrone während des Kernbohrvorgangs ist für den ordnungsgemäßen und effizienten Ablauf des Kernbohrvorgangs und insbesondere für eine materialschonende Verwendung der Bohrkrone und der Kernbohrmaschine von hoher Bedeutung. Hierzu bedarf es jedoch häufig einer relativ feinen Geräteabstimmung auf den jeweiligen Bohrkronendurchmesser. Die richtige Abstimmung der Drehgeschwindigkeit, des Drehmoments und des korrekten Gangs auf den Durchmesser der jeweils verwendeten Bohrkrone bei einer gleichzeitig ständig wechselnden Beschaffenheit (z.B. Härtegrad) des zu bearbeitenden Werkstoffs stellt einen Anwender der Kernbohrmaschine jedoch oft vor große Probleme. Der Kernbohrvorgang kann damit entweder ineffizient sowie langsam werden oder aber es kann zu Beschädigungen an der Bohrkrone kommen.

Beispielsweise wird in EP 2 762 278 A2, die die Präambel des Anspruches 1 offenbart, ein elektrisches Werkzeug offenbart, das einer Umkehrbegrenzungsabschnitt umfasst, der in einem Schwenkelement angeordnet ist.

Die US 2013 292 147 A1 offenbart ein Werkzeuggerät mit einem Auswahlschalter für die Geschwindigkeit.

In der EP 3 135 438 A1 wird ein elektrisch betriebenes Werkzeug offenbart, wobei das Werkzeug unter anderem eine Antriebskraftübertragung und eine Drehzahländerungsschaltung umfasst.

Bei den auf dem Markt befindlichen Kernbohrmaschinen bzw. bei den Kernbohrmaschinen gemäß dem Stand der Technik ist jedoch eine derartige Feinabstimmung zwischen der Größe (Durchmesser), der Drehgeschwindigkeit, des Drehmoments der Bohrkrone oder des gewählten Gangs der Kernbohrmaschine entweder überhaupt nicht vorgesehen oder für den Anwender der Kernbohrmaschine sehr aufwendig verwirklicht.

Aufgabe der vorliegenden Erfindung ist es daher, das vorstehend genannte Problem zu lösen. Die Aufgabe wird gelöst durch den Gegenstand der unabhängigen Ansprüche 1 und 2. Vorteilhafte Ausführungsformen des erfindungsgemäßen Gegenstands sind in den abhängigen Ansprüchen enthalten.

Die Aufgabe wird dabei gelöst durch das Bereitstellen eines Verfahrens zum Einstellen eines Ganges in einem Getriebe einer Werkzeugmaschine, insbesondere einer Kernbohrmaschine, wobei die Werkzeugmaschine einen Elektromotor zum Erzeugen und Übertragen eines Drehmoments auf das Getriebe sowie ein Steuerungsgerät zum Einstellen der Drehzahl des Elektromotors enthält und das Getriebe eine Bedienvorrichtung zum Auswählen eines Ganges in dem Getriebe, eine Schaltgabel zum Einlegen eines Ganges in dem Getriebe sowie ein Schrittmotor zum Übertragen einer Bewegung der Bedienvorrichtung auf die Schaltgabel enthält, wobei die Bedienvorrichtung wenigstens einen Signalgeber sowie wenigstens einen Sensor zum Empfangen wenigstens eines Signals des wenigstens einen Signalgebers enthält.

Die Aufgabe wird außerdem gelöst durch das Bereitstellen einer Werkzeugmaschine zur Durchführung des erfindungsgemäßen Verfahrens.

Erfindungsgemäß ist vorgesehen, dass das Verfahren die folgenden Verfahrensschritte enthält:
- Einstellen der Bedienvorrichtung von einer ersten Position in eine zweite Position zum Auswählen eines Ganges in dem Getriebe;
- Erfassen eines Signals durch den wenigstens einen Sensor entsprechend der zweiten Position der Bedienvorrichtung;
- Senden des Signals an das Steuerungsgerät;
- Einstellen der Drehzahl des Elektromotors von einem ersten Wert auf einen zweiten Wert durch das Steuerungsgerät;
- Positionieren der Bedienvorrichtung von der zweiten Position in eine dritte Position;
- Einstellen des Schrittmotors von einer ersten Position in eine zweite Position entsprechend der dritten Position der Bedienvorrichtung; und
- Einstellen der Schaltgabel von einer ersten Position in eine zweite Position zum Wechseln von einem ersten Gang in einen zweiten Gang.

Des Weiteren wird die Aufgabe gelöst durch das Bereitstellen einer Werkzeugmaschine zur Durchführung des erfindungsgemäßen Verfahrens, wobei die Werkzeugmaschine ein Getriebe, einen Elektromotor zum Erzeugen und Übertragen eines Drehmoments auf das Getriebe, ein Steuerungsgerät zum Einstellen der Drehzahl des Elektromotors, eine Bedienvorrichtung zum Auswählen eines Ganges in dem Getriebe, eine Schaltgabel zum Einlegen eines Ganges in dem Getriebe und ein Schrittmotor zum Übertragen einer Bewegung der Bedienvorrichtung zum Auswählen eines Ganges in dem Getriebe auf die Schaltgabel, wobei die Bedienvorrichtung wenigstens einen Signalgeber sowie wenigstens einen Sensor zum Empfangen wenigstens eines Signals des wenigstens einen Signalgebers enthält.

Gemäß einer weiteren vorteilhaften Ausführungsform der vorliegenden Erfindung kann es möglich sein, dass der Signalgeber in Form eines Magneten und der Sensor in Form eines Hall-Sensors ausgestaltet ist. Es ist jedoch auch möglich, dass jede andere geeignete Art von Signalgeber und Sensor verwendet wird.

Entsprechend einer vorteilhaften Ausführungsform der vorliegenden Erfindung kann es möglich sein, dass ein Schaltenergiespeicher in dem Getriebe enthalten ist, wodurch eine Kraft auf eine Schaltgabel des Getriebes ausgeübt werden kann, um die Schaltgabel für einen Übergang von einer ersten Position zu einer zweiten Position vorzuspannen. Der Schaltenergiespeicher kann dabei als Federelement ausgestaltet sein. Hierdurch kann bei einem Gangwahlvorgang ein neuer Gang vorgewählt werden, sodass der neue Gang sobald eingestellt wird, wenn das Getriebe hierzu in der Lage ist. Dies ist insbesondere dann vorteilhaft, wenn die Konstellation der Zahnräder innerhalb des Getriebes zueinander ein Einstellen eines neuen Gangs nicht sofort ermöglichen.

Darüber hinaus wird im Kontext der vorliegenden Erfindung ein Getriebe offenbart für eine Werkzeugmaschine, insbesondere eine Kernbohrmaschine, zur Durchführung des erfindungsgemäßen Verfahrens.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine schematische Darstellung einer erfindungsgemäßen Werkzeugmaschine mit einem Getriebe, einem Elektromotor, einem Steuerungsgerät und einer Bedienvorrichtung;
- Fig. 2: eine Detailansicht eines Drehschalters der Bedienvorrichtung mit einem Signalgeber und Sensor;
- Fig. 3: eine perspektivische Ansicht eines Getriebes der Werkzeugmaschine;
- Fig. 4: eine perspektivische Ansicht der Bedienvorrichtung, einer Schaltgabel und Zahnräder;
- Fig. 5: eine weitere perspektivische Ansicht der Bedienvorrichtung, der Schaltgabel und Zahnräder;
- Fig. 6: eine Vorderansicht der Bedienvorrichtung, der Schaltgabel und Zahnräder;

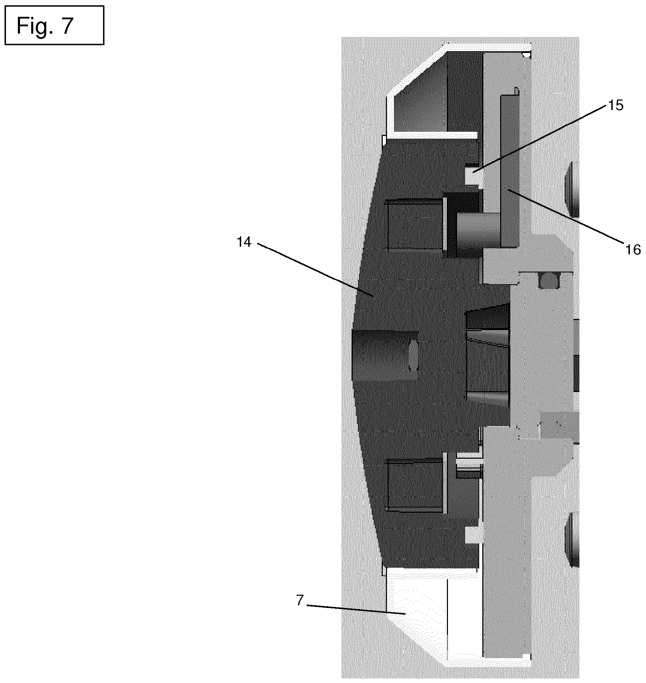

- Fig. 7: eine Schnittansicht durch die Bedienvorrichtung;
- Fig. 8: den Drehschalter der Bedienvorrichtung, welcher von einer ersten Stellung in eine zweite Stellung bewegt wird; und
- Fig. 9: den Drehschalter der Bedienvorrichtung, welcher von einer zweiten Stellung in eine dritte Stellung bewegt wird.

### Ausführunasbeispiel:

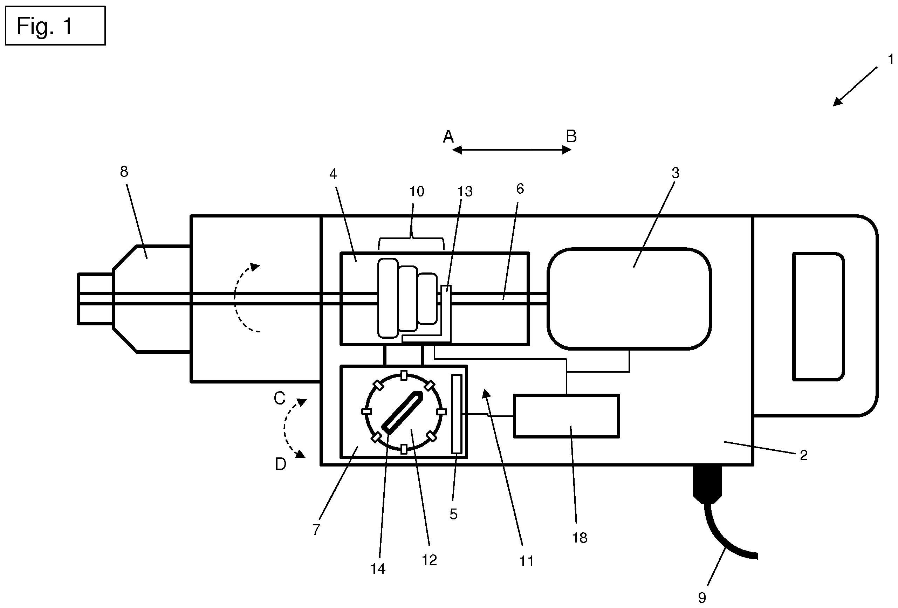

Fig. 1 zeigt eine Ausführungsform einer erfindungsgemäßen Werkzeugmaschine 1 in einer Ausgestaltung einer Kernbohrmaschine.

Die als Kernbohrmaschine ausgestaltete Werkzeugmaschine 1 enthält im Wesentlichen ein Gehäuse 2, einen Elektromotor 3, ein Getriebe 4, ein Steuerungsgerät 18, ein Abtriebswelle 6, eine Bedienvorrichtung 7 und eine Werkzeugaufnahme 8. Wie Fig. 1 zu entnehmen ist, ist der Elektromotor 3, das Getriebe 4, das Steuerungsgerät 18 und die Abtriebswelle 6 im Inneren des Gehäuses 2 positioniert. Die Bedienvorrichtung 7 ist an dem Gehäuse 2 positioniert, sodass diese von außen durch einen Anwender bedienbar ist. An dem Gehäuse 2 ist ein Stromkabel 9 zur Versorgung der Werkzeugmaschine 1 mit elektrischem Strom angedeutet.

Der Elektromotor 3 dient zum Erzeugen eines Drehmoments, welches über die Abtriebswelle 6 und das Getriebe 4 an die Werkzeugaufnahme 8 weitergeleitet wird. Die Werkzeugaufnahme 8 dient zum Aufnehmen und Halten eines Werkzeugs, mit dem ein Werkstoff (z.B. Beton) bearbeitet werden kann. Bei dem Werkzeug kann es sich im Falle der Ausgestaltung der Werkzeugmaschine 1 in Form einer Kernbohrmaschine um eine Bohrkrone handeln. Weder das Werkzeug noch der Werkstoff sind in den Figuren dargestellt.

Das Steuerungsgerät 18 dient unter anderem zum Einstellen und der Überwachung der Drehzahl des Elektromotors 3. Hierzu ist das Steuerungsgerät 18 sowohl mit der Bedienvorrichtung 7, dem Getriebe 4 und dem Elektromotor 3 verbunden, vgl. Fig. 1.

Das Getriebe 4 enthält drei Zahnräder 10 zur variablen Übersetzung des von dem Elektromotor 3 eingeleiteten Drehmoments in das Getriebe 4. Obwohl das in den Figuren gezeugte Getriebe 4 nur drei Zahnräder 10 enthält, ist es möglich mehr als drei Gänge in dem Getriebe 4 einzulegen wie nachfolgend im Detail gezeigt wird. Es ist jedoch auch möglich, dass das Getriebe 4 mehr oder weniger als drei Zahnräder 10 enthält.

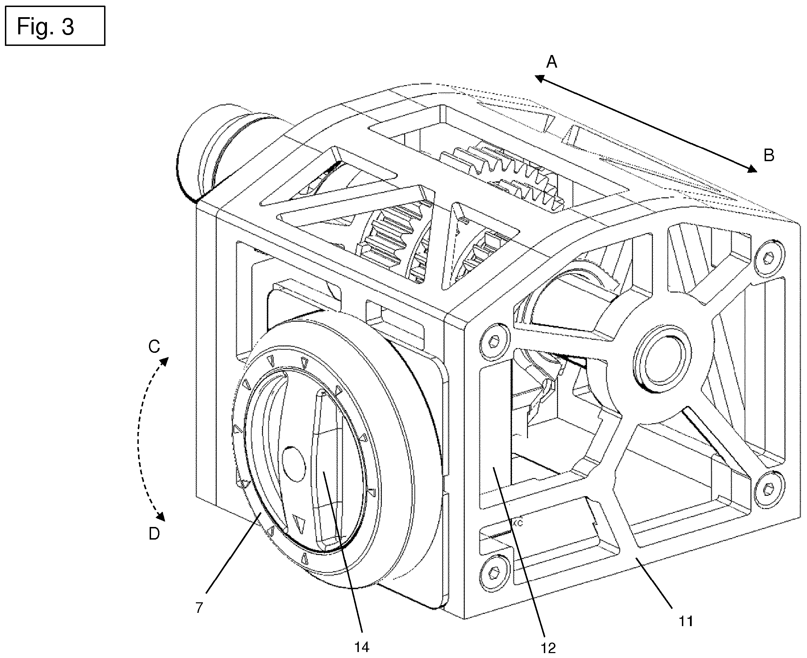

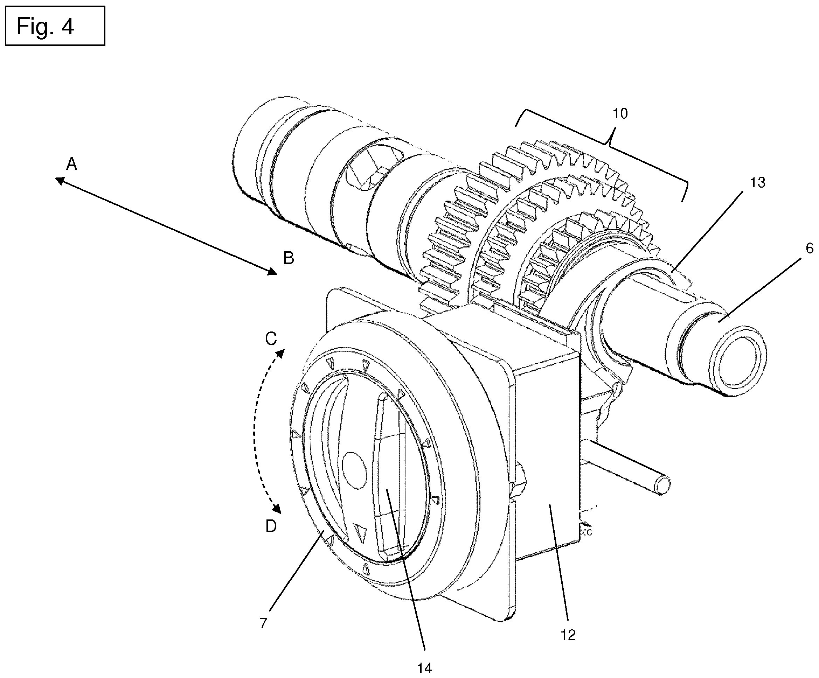

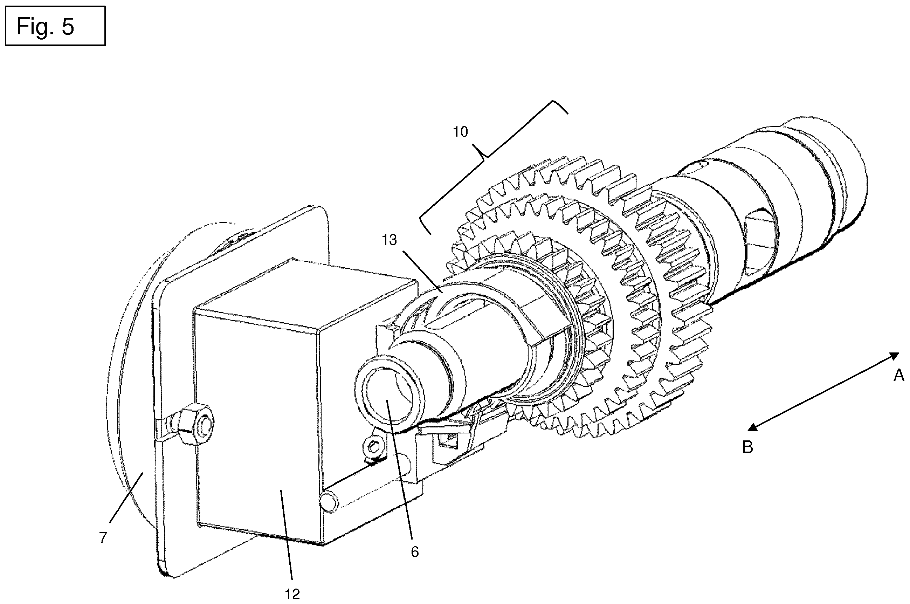

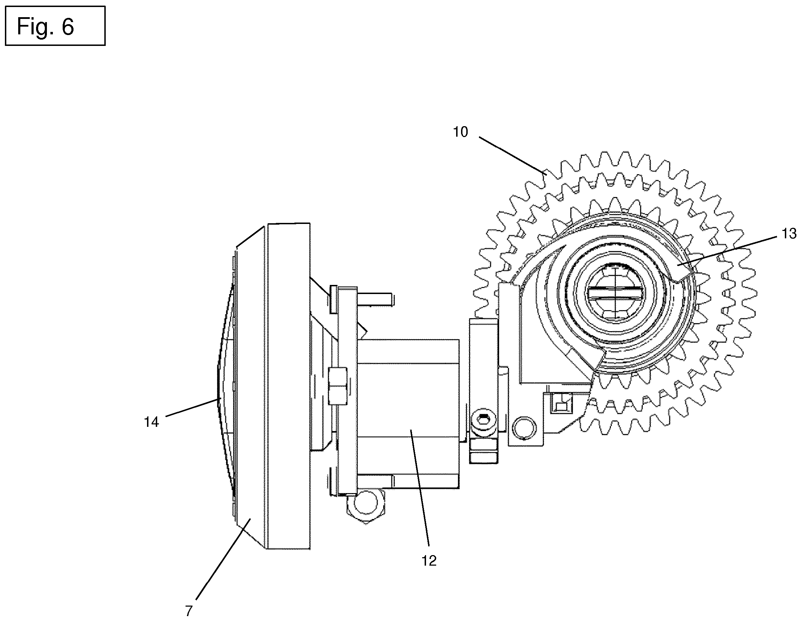

In den Fig. 3 bis 6 ist ein Ausführungsbeispiel des Getriebes 4 gezeigt. Das Getriebe 4 ist mit der Bedienvorrichtung 7 verbunden und enthält im Wesentlichen ein Gehäuse 11, einen Teil der Abtriebswelle 6, ein Schrittmotor 12, die drei Zahnräder 10 sowie eine Schaltgabel 13. Der Schrittmotor 12 und ein Teil der Schaltgabel 13 sind dabei in dem Gehäuse 11 positioniert. Der Schrittmotor 12 kann als Schaltzylinder oder Malteserkreuzgetriebe ausgestaltet sein.

Die Bedienvorrichtung 7 dient dem Anwender der Werkzeugmaschine 1 wiederum zum Auswählen eines Ganges in dem Getriebe 4 bzw. zur Einstellung eines Drehzahlwertes für den Elektromotor 3. Die Einstellung des Drehzahlwertes mit Hilfe der Bedienvorrichtung 7 gemäß dem vorliegenden erfindungsgemäßen Verfahren bewirkt dabei nicht einen mechanischen, sondern einen elektronischen Gangwechsel. Mit anderen Worten: Die Einstellung bzw. das Ändern des Drehzahlwertes mit Hilfe der Bedienvorrichtung 7 erscheint als ein mechanischer Gangwechsel, bei dem von einer Zahlradkonstellation in eine andere Zahnradkonstellation gewechselt wird.

Die Bedienvorrichtung 7 enthält des Weiteren einen Drehschalter 14, der relativ zu einer Ziffernanzeige in Drehrichtung C oder D gedreht werden kann. Durch die Ziffernanzeige erkennt der Anwender der Kernbohrmaschine 1, welcher Gang eingelegt ist bzw. welcher Gang eingelegt werden kann. Der Drehschalter 14 kann auch als Gangwahlschalter bezeichnet werden.

Gemäß einer nicht in den Figuren dargestellten alternativen Ausgestaltungsform kann die Bedienvorrichtung 7 auch mit einer elektronischen Anzeige verbunden sein, um dem Anwender mittels eines Bildschirms (Display) den momentan eingelegten Gang anzuzeigen.

Der Schrittmotor 12 dient im Wesentlichen zur Übertragung der Drehbewegung des Drehschalters 14 in Drehrichtung C oder D in eine Linearbewegung der Schaltgabel 13 in Richtung A oder B. Der Schrittmotor 12 ist daher mit der Schaltgabel 13 verbunden. Die Besonderheit des Schrittmotors 12 besteht darin, dass nicht jede Drehbewegung des Drehschalters 14 in eine korrespondierende Drehbewegung des Schrittmotors 12 resultiert. Mit anderen Worten: nur jede zweite abschnittsweise vorgenommene Drehbewegung bzw. nur jede zweite Drehbewegung entlang eines Sektors führt zu einer Drehbewegung des Schrittmotors 12.

Die Schaltgabel 13 dient wiederum zum eigentlichen Ausrichten der Zahnräder 10 zueinander innerhalb des Getriebes 4, um eine bestimmte Übersetzung bzw. Zahnradkonstellation einzustellen.

Des Weiteren enthält die Bedienvorrichtung 7 einen Signalgeber 15 in Form eines Magneten. Alternativ kann die Bedienvorrichtung 7 auch mehr als einen Signalgeber 15 in Form von mehreren Magneten enthalten. Es ist jedoch auch möglich, dass jede andere geeignete Art von Signalgeber 15 verwendet ist. So kann beispielsweise gemäß einer alternativen Ausgestaltungsform auch ein Metallring als Signalgeber 15 und ein entsprechend zu dem Metallring passender Induktionssensor vorgesehen sein.

Der Signalgeber 15 ist fest an dem Drehschalter 14 positioniert und dient zum Aussenden von Signalen entsprechend der Stellung bzw. Drehposition des Drehschalters 14 der Bedienvorrichtung 7.

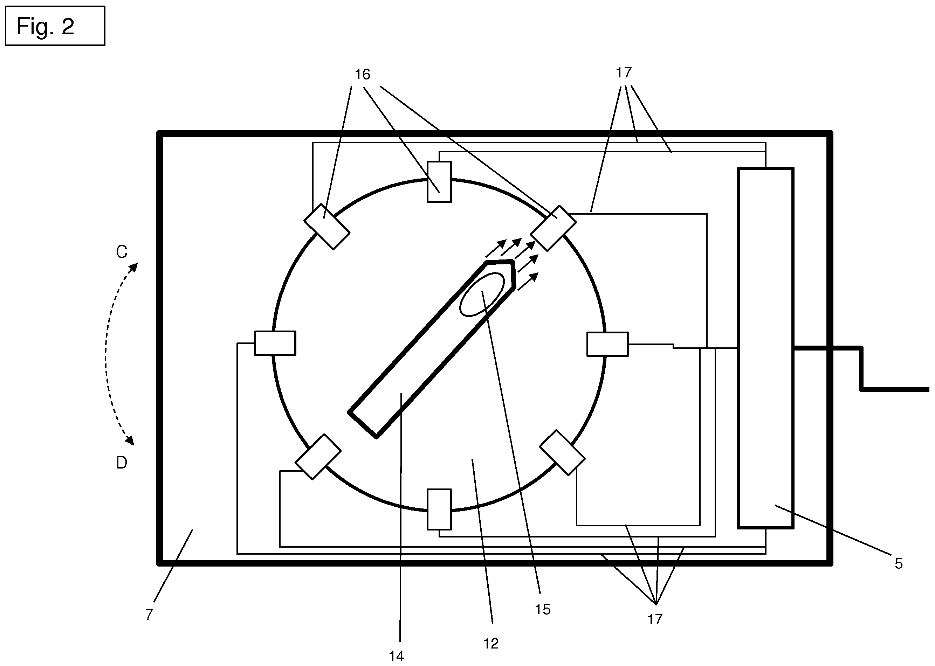

Darüber hinaus enthält die Bedienvorrichtung 7 eine Anzahl von Sensoren 16 in Form von Hallsensoren entsprechend zu der Ausgestaltung des Signalgebers 15 als Magnet. Es ist jedoch auch möglich, dass jede andere geeignete Art von Sensor verwendet wird. Der Sensor 16 dient zum Empfangen des Signals von dem Signalgeber 15. Die in Figur 2 dargestellten Pfeile an dem Signalgeber stellen Magnetfeder dar.

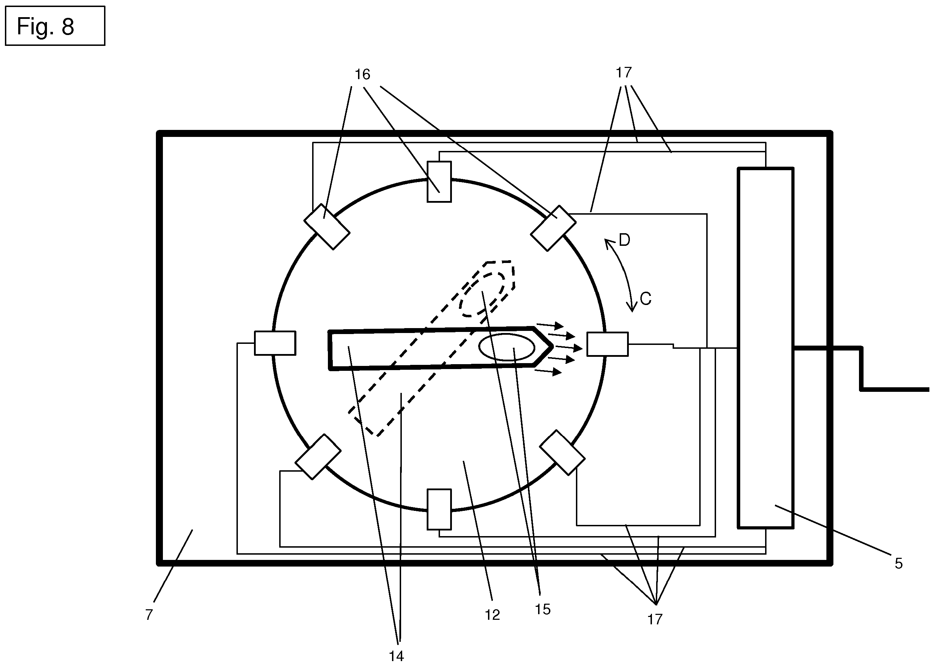

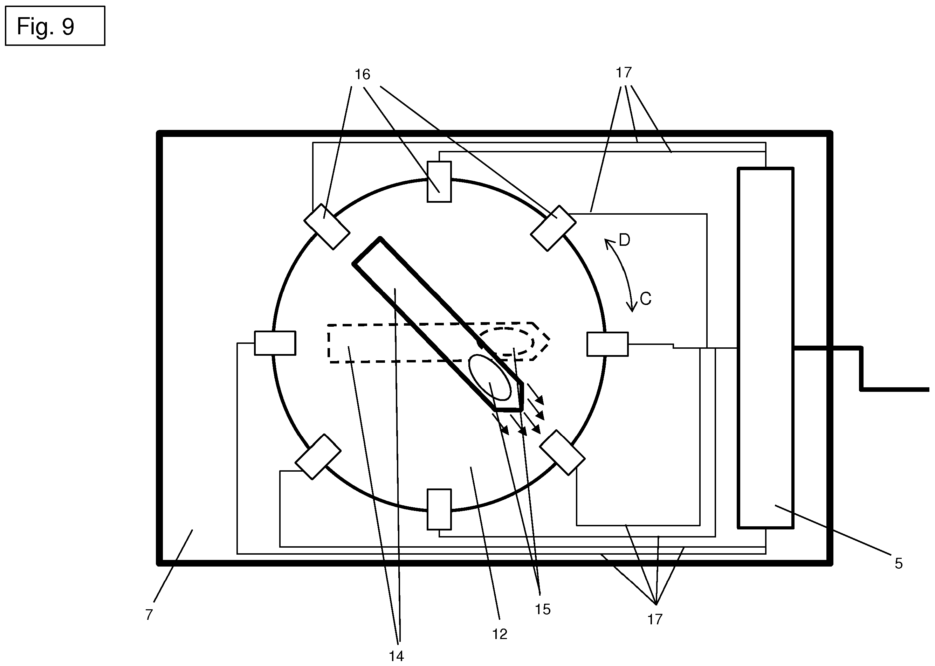

Wie in Fig. 2 dargestellt, sind vier Sensoren 16 kreisförmig fest an der Bedienvorrichtung 7 positioniert, um so das Magnetfeld des als Magnet ausgestalteten Signalgebers 15 an dem Drehschalter 14 zu erfassen. Es ist zu beachten, dass lediglich an jeder zweiten möglichen Drehposition des Drehschalters 14 ein Sensor 16 vorgesehen ist (vgl. Fig. 8 und 9). Wenn der Drehschalter 14 zu einer dieser vier mit Sensor 16 ausgestatteten Drehstellungen ausgerichtet ist, kann der Sensor 16 den Signalgeber 15 an dem Drehschalter 14 erkennen und die Position des Drehschalters 14 zu einer der vier Drehpositionen zuordnen. Es ist jedoch auch möglich, dass an mehr oder weniger als vier Drehpositionen Sensoren 16 positioniert sind.

Jeder Sensor 16 ist über eine Leitung 17 mit einer Steuerungseinheit 5 verbunden, um die empfangenen Signale von dem Signalgeber 15 an die Steuerungseinheit 5 zu senden (vgl. Fig. 2, 8 und 9). Die Steuerungseinheit 5 ist wiederum mit einem Steuerungsgerät 18 des Elektromotors 3 verbunden (vgl. Fig. 1). Alternativ ist die Steuerungseinheit 5 auch direkt mit dem Elektromotor 3 verbunden. Die Verbindung dient dazu, ein entsprechendes Signal von der Steuerungseinheit 5 des Getriebes 4 an das Steuerungsgerät 18 des Elektromotors 3 zu senden. Das Steuerungsgerät 18 kann die Stromzufuhr zu dem Elektromotor 3 regulieren und damit den Drehzahlwert des Elektromotors 3 steuern. Bei dem Drehzahlwert handelt es sich um den Solldrehzahlwert.

Dadurch, dass (wie vorstehend bereits beschrieben) der Schrittmotor 12 eine kontinuierliche Drehbewegung des Drehschalters 14 in eine intermittierende Drehbewegung umsetzen kann, führt nicht jede Drehbewegung des Drehschalters 14 zu einer Aktivierung der Schaltgabel 13 und folglich zu einem mechanischen Gangwechsel bzw. zu einer Änderung der Zahnradkonstellation.

Wenn, wie in Fig. 8 gezeigt, der Drehschalter 14 von einer ersten Stellung in eine zweite Stellung in Richtung C gedreht wird, um die Bedienvorrichtung 7 von einer ersten Position in eine zweite Position zum Auswählen eines Ganges in dem Getriebe 4 zu bewegen, wird mit Hilfe des Schrittmotors 12 die Schaltgabel 13 in Richtung A bewegt, sodass die Zahnräder 10 in dem Getriebe 4 in eine andere Konstellation gebracht werden. Mit anderen Worten: durch den Schrittmotor 12 und die Schaltgabel 13 wird ein höherer Gang eingelegt. Hierbei wird kein Signal von dem Sensor 16 über die Steuerungseinheit 5 an das Steuerungsgerät 18 gesendet, um die Drehzahl des Elektromotors 3 zu verändern. Die Gangveränderung findet hierbei rein mechanisch statt.

Wenn jedoch, wie in Fig. 9 gezeigt, der Drehschalter 14 weiter von der zweiten Stellung in eine dritte Stellung in Richtung C gedreht wird, um die Bedienvorrichtung 7 von der zweiten Position in eine dritte Position zum Auswählen eines anderen Ganges in dem Getriebe 4 zu bewegen, wird ein Signal von dem Signalgeber 15 (d.h. von dem Magneten) an dem entsprechenden Sensor 16 erfasst. Der Sensor 16 sendet ein Signal an die Steuerungseinheit 5. Die Steuerungseinheit 5 erkennt die Drehstellung des Drehschalters 14 und sendet wiederum ein entsprechendes Signal über das Steuerungsgerät 18 an den Elektromotor 3, um einen Drehzahlsollwert einzustellen. Im vorliegenden Fall wird die Drehzahlsollwert erhöht. Die Schaltgabel 13 wird hierbei nicht von dem Schrittmotor 12 aktiviert, sodass ein rein elektronischer Gangwechsel vollzogen wird. Durch die Änderung des Drehzahlsollwertes des Elektromotors 3 kann daher ohne mechanischen Gangwechsel, d.h. ohne neue Zahlradkonstellation, eine zusätzliche Spreizung für das Getriebe 4 erreicht werden.

Entsprechend einer alternativen Ausgestaltung kann auch ein Schaltenergiespeicher in dem Getriebe 4 enthalten sein. Der Schaltenergiespeicher kann dabei als Federmechanismus bzw. Feder ausgestaltet sein. Durch den als Federmechanismus ausgestalteten Schaltenergiespeicher wird eine Kraft auf die Schaltgabel 13 ausgeübt, um die Schaltgabel 13 für einen Übergang von einer ersten Position zu einer zweiten Position vorzuspannen. Der Schaltenergiespeicher ist in den Figuren nicht dargestellt.

Ist die lineare Bewegung der Schaltgabel 13 nicht möglich wird der als Federmechanismus ausgestalteten Schaltenergiespeicher aktiviert, der die Bewegungsenergie in eine Vorspannung bzw. Federvorspannung speichert, so dass eine Gangvorwahl vorliegt. Das heißt, der gewählte Gang wird erst bei Wiederanlauf oder bei geringer Drehzahl umsetzbar. Sobald die Bewegung der Schaltgabel 13 möglich ist, wird der durch den Schaltenergiespeicher vorgewählte Gang mittels der Schaltgabel 13 eingelegt und nimmt die Schaltenergiespeicher nimmt wieder die Ausgangsstellung, d.h. nicht gespannte Stellung, ein. Der Mechanismus der Gangvorwahl ist so ausgelegt, dass vom ersten bis zum höchsten wählbaren Gang geschalten werden kann, ohne dass ein Fluchten innerhalb des Schaltmechanismus erzeugt wird.

### Bezugszeichen:

- 1: Werkzeugmaschine
- 2: Gehäuse der Werkzeugmaschine
- 3: Elektromotor
- 4: Getriebe
- 5: Steuerungseinheit
- 6: Abtriebswelle
- 7: Bedienvorrichtung
- 8: Werkzeugaufnahme
- 9: Stromkabel
- 10: Zahnräder
- 11: Gehäuse des Getriebes
- 12: Schrittmotor
- 13: Schaltgabel
- 14: Drehschalter
- 15: Signalgeber
- 16: Sensor
- 17: Leitung
- 18: Steuerungsgerät

## Patentansprüche

1. Verfahren zum Einstellen eines Ganges in einem Getriebe (4) einer Werkzeugmaschine (1), insbesondere einer Kernbohrmaschine, wobei die Werkzeugmaschine (1) einen Elektromotor (3) zum Erzeugen und Übertragen eines Drehmoments auf das Getriebe (4) sowie eine Steuerungsgerät (18) zum Einstellen der Drehzahl des Elektromotors (3) enthält und das Getriebe (4) eine Bedienvorrichtung (7) zum Auswählen eines Ganges in dem Getriebe (4), eine Schaltgabel (13) zum Einlegen eines Ganges in dem Getriebe (4) sowie ein Aktuator zum Übertragen einer Bewegung der Bedienvorrichtung auf die Schaltgabel (13) enthält, wobei die Bedienvorrichtung (7) wenigstens einen Signalgeber (15) sowie wenigstens einen Sensor (16) zum Empfangen wenigstens eines Signals des wenigstens einen Signalgebers (15) enthält,
wobei das Verfahren die folgenden Verfahrensschritte enthält:
- Einstellen der Bedienvorrichtung (7) von einer ersten Position in eine zweite Position zum Auswählen eines Ganges in dem Getriebe (4);
- Erfassen eines Signals durch den wenigstens einen Sensor (16) entsprechend der zweiten Position der Bedienvorrichtung (7);
- Senden des Signals an das Steuerungsgerät (18);
**dadurch gekennzeichnet, dass** der Aktuator ein Schrittmotor (12) ist; und
wobei das Verfahren die folgenden Verfahrensschritte enthält:
- Einstellen der Drehzahl des Elektromotors (3) von einem ersten Wert auf einen zweiten Wert durch das Steuerungsgerät (18);
- Positionieren der Bedienvorrichtung (7) von der zweiten Position in eine dritte Position;
- Einstellen des Schrittmotors (12) von einer ersten Position in eine zweite Position entsprechend der dritten Position der Bedienvorrichtung (7); und
- Einstellen der Schaltgabel (13) von einer ersten Position in eine zweite Position zum Wechseln von einem ersten Gang in einen zweiten Gang.

2. Werkzeugmaschine (1) zur Durchführung des Verfahrens nach Anspruch 1 enthaltend ein Getriebe (4), einen Elektromotor (3) zum Erzeugen und Übertragen eines Drehmoments auf das Getriebe (4), ein Steuerungsgerät (18) zum Einstellen der Drehzahl des Elektromotors (3), eine Bedienvorrichtung (7) zum Auswählen eines Ganges in dem Getriebe (4), eine Schaltgabel (13) zum Einlegen eines Ganges in dem Getriebe (4) und ein Schrittmotor (12) zum Übertragen einer Bewegung der Bedienvorrichtung (7) zum Auswählen eines Ganges in dem Getriebe (4) auf die Schaltgabel (13), wobei die Bedienvorrichtung (7) wenigstens einen Signalgeber (15) sowie wenigstens einen Sensor (16) zum Empfangen wenigstens eines Signals des wenigstens einen Signalgebers (15) enthält.

3. Werkzeugmaschine (1) nach Anspruch 2,
**dadurch gekennzeichnet, dass** der Signalgeber (15) in Form eines Magneten und der Sensor (16) in Form eines Hall-Sensors ausgestaltet ist.

4. Werkzeugmaschine (1) nach Anspruch 2 oder 3,
**dadurch gekennzeichnet, dass** ein Schaltenergiespeicher in dem Getriebe (4) enthalten ist, wodurch eine Kraft auf eine Schaltgabel (13) des Getriebes (4) ausgeübt werden kann, um die Schaltgabel (13) für einen Übergang von einer ersten Position zu einer zweiten Position vorzuspannen.

## Claims

1. Method for setting a gear in a gear mechanism (4) of a power tool (1), in particular a power core drill, wherein the power tool (1) includes an electric motor (3) for generating and transmitting a torque to the gear mechanism (4) and a control unit (18) for setting the speed of the electric motor (3), and the gear mechanism (4) includes an operating device (7) for selecting a gear in the gear mechanism (4), a gearshift fork (13) for engaging a gear in the gear mechanism (4) and an actuator for transmitting a movement of the operating device to the gearshift fork (13), wherein the operating device (7) includes at least one signal transmitter (15) and at least one sensor (16) for receiving at least one signal from the at least one signal transmitter (15), wherein the method comprises the following method steps:
- adjusting the operating device (7) from a first position to a second position for selecting a gear in the gear mechanism (4);
- detecting a signal using the at least one sensor (16) in accordance with the second position of the operating device (7);
- sending the signal to the control unit (18);
**characterized in that** the actuator is a stepper motor (12); and wherein the method comprises the following method steps:
- adjusting the speed of the electric motor (3) from a first value to a second value using the control unit (18);
- positioning the operating device (7) from the second position to a third position;
- adjusting the stepper motor (12) from a first position to a second position in accordance with the third position of the operating device (7); and
- adjusting the gearshift fork (13) from a first position to a second position for changing from a first gear to a second gear.

2. Power tool (1) for carrying out the method according to Claim 1, including a gear mechanism (4), an electric motor (3) for generating and transmitting a torque to the gear mechanism (4), a control unit (18) for adjusting the speed of the electric motor (3), an operating device (7) for selecting a gear in the gear mechanism (4), a gearshift fork (13) for engaging a gear in the gear mechanism (4) and a stepper motor (12) for transmitting a movement of the operating device (7) for selecting a gear in the gear mechanism (4) to the gearshift fork (13), wherein the operating device (7) includes at least one signal transmitter (15) and at least one sensor (16) for receiving at least one signal from the at least one signal transmitter (15).

3. Power tool (1) according to Claim 2, **characterized in that** the signal transmitter (15) is designed in the form of a magnet and the sensor (16) is designed in the form of a Hall sensor.

4. Power tool (1) according to Claim 2 or 3, **characterized in that** the gear mechanism (4) includes a shifting energy store, whereby a force can be exerted on a gearshift fork (13) of the gear mechanism (4) in order to pretension the gearshift fork (13) for a transfer from a first position to a second position.

## Revendications

1. Procédé permettant de régler une vitesse dans une boîte de vitesses (4) d'une machine-outil (1), en particulier d'une sondeuse-carotteuse, dans lequel la machine-outil (1) comprend un moteur électrique (3) pour générer et transmettre un couple à la boîte de vitesses (4), ainsi qu'un appareil de commande (18) pour régler la vitesse de rotation du moteur électrique (3), et la boîte de vitesses (4) comprend un dispositif d'actionnement (7) pour sélectionner une vitesse dans la boîte de vitesses (4), une fourchette de sélection (13) pour enclencher une vitesse dans la boîte de vitesses (4), ainsi qu'un actionneur pour transmettre un mouvement du dispositif d'actionnement à la fourchette de sélection (13), dans lequel le dispositif d'actionnement (7) comprend au moins un générateur de signaux (15) ainsi qu'au moins un capteur (16) pour recevoir au moins un signal dudit au moins un générateur de signaux (15),
le procédé comprenant les étapes de procédé suivantes consistant à :
- régler le dispositif d'actionnement (7) d'une première position à une deuxième position pour sélectionner une vitesse dans la boîte de vitesses (4) ;
- détecter un signal par ledit au moins un capteur (16) selon la deuxième position du dispositif d'actionnement (7) ;
- envoyer le signal à l'appareil de commande (18) ;
**caractérisé en ce que** l'actionneur est un moteur pas-à-pas (12) ; et
le procédé comprenant les étapes de procédé suivantes consistant à :
- régler la vitesse de rotation du moteur électrique (3) d'une première valeur à une deuxième valeur par l'appareil de commande (18) ;
- positionner le dispositif d'actionnement (7) de la deuxième position à une troisième position ;
- régler le moteur pas-à-pas (12) d'une première position à une deuxième position selon la troisième position du dispositif d'actionnement (7) ; et
- régler la fourchette de sélection (13) d'une première position à une deuxième position pour passer d'une première vitesse à une deuxième vitesse.

2. Machine-outil (1) permettant d'exécuter le procédé selon la revendication 1, comprenant une boîte de vitesses (4), un moteur électrique (3) pour générer et transmettre un couple à la boîte de vitesses (4), un appareil de commande (18) pour régler la vitesse de rotation du moteur électrique (3), un dispositif d'actionnement (7) pour sélectionner une vitesse dans la boîte de vitesses (4), une fourchette de sélection (13) pour enclencher une vitesse dans la boîte de vitesses (4) et un moteur pas-à-pas (12) pour transmettre à la fourchette de sélection (13) un mouvement du dispositif d'actionnement (7) pour sélectionner une vitesse dans la boîte de vitesses (4), dans lequel le dispositif d'actionnement (7) comprend au moins un générateur de signaux (15) ainsi qu'au moins un capteur (16) pour recevoir au moins un signal dudit au moins un générateur de signaux (15).

3. Machine-outil (1) selon la revendication 2, **caractérisée en ce que** le générateur de signaux (15) est configuré sous la forme d'un aimant et le capteur (16) est configuré sous la forme d'un capteur à effet Hall.

4. Machine-outil (1) selon la revendication 2 ou 3, **caractérisée en ce qu'**un accumulateur d'énergie de sélection est inclus dans la boîte de vitesses (4) de sorte qu'une force peut être exercée sur une fourchette de sélection (13) de la boîte de vitesses (4) afin de précontraindre la fourchette de sélection (13) pour un passage d'une première position à une deuxième position.
